# EUROPÄISCHE PATENTSCHRIFT

(11) **EP 0 937 842 B1**
(45) Veröffentlichungstag und Bekanntmachung des Hinweises auf die Patenterteilung: **30.07.2003**
(21) Anmeldenummer: 98102958.0
(22) Anmeldetag: 20.02.1998
(51) Int. Cl.: E04H 17/10

(54) **Drahthalter für einem Nutzaunpfahl**
Wire grip for a fence post
Serre-fil pour poteau de clôture

(43) Veröffentlichungstag der Anmeldung: 25.08.1999
(73) Patentinhaber: Gust. Alberts GmbH & Co. KG, 58849 Herscheid (DE)
(72) Erfinder: Bauer, Anton, 58849 Herscheid (DE)
(74) Vertreter: Hassler, Werner, Dr.

(56) Entgegenhaltungen:
- EP-A- 0 062 690
- EP-A- 0 280 266
- EP-A- 0 740 035
- DE-A- 3 422 049
- US-A- 5 288 190

## Beschreibung

Die Erfindung betrifft einen Drahthalter für einen Nutzaunpfahl dessen Körper einen in die Nut einsetzbaren, mit einem Spannelement zusammenwirkenden Fuß mit zwei parallelen, eine Rinne begrenzenden, nachgiebigen Zungen aufweist.

Drahthalter lassen sich nur schwer in Nuten von Nutzaunpfählen montieren. Meist ist auch nur an konkreten Stellen der Nut eine Festspannung möglich.

Die EP-A-0062690 beschreibt einen Drahthalter der gattungsgemäßen Art der in einem Loch eines Pfostens montierbar und festspannbar ist. Für die Festlegung in einer Nut eines Nutzaunpfahls ist dieser Drahthalter nicht geeignet.

Die US-A-5288190 beschreibt einen Spreizdübel für Hinterschnittbohrungen mit einem Spreizkegel. Ein derartiger Spreizdübel ist in Nuten eines Nutzaunpfahls nicht anwendbar.

Aufgabe der Erfindung ist die Schaffung einer Möglichkeit zum Festpannen und Lösen des Drahthalters innerhalb einer Nut eines Nutzaunpfahls an beliebiger Stelle innerhalb der Nut.

Diese Aufgabe wird nach der Erfindung dadurch gelöst, daß der Fuß mit einem zylinderförmig ausgebildeten Spannelement zusammenwirkt, daß das Spannelement mit einem senkrecht zur Zylinderachse ausgerichteten Gewindedurchgang in die Rinne einlegbar ist und an den Zungen anliegt und daß eine Schraube durch einen Durchgang des Körpers hindurchreicht und in den Gewindedurchgang des Spannelements eingreift.

Die Erfindung unterscheidet sich insofern vom Stand der Technik, als die nachgiebigen Zungen ein Einsprengen des Drahthalters in die Nut ermöglichen. Durch Anziehen des Spannelements durch die Schraube werden die Zungen gespreizt und legen sich an den Innenwänden der Nut fest. Das zylinderförmige Spannelement ermöglicht eine großflächige Festspannung. Der Drahthalter kann an jeder Stelle der Nut festgespannt werden. Es ist jederzeit ein Lösen der Schraube, ein Verschieben des Drahthalters in Längsrichtung der Nut und ein erneutes Festspannen möglich.

Der Körper kann aus einem beliebigen Werkstoff wie einem elastischen Thermoplast oder Metall bestehen.

Eine gleichmäßige und effektive Spreizung der Zungen wird dadurch sichergestellt, daß die Rinne einen V-förmigen Querschnitt hat.

Damit der Drahthalter auch bei ungespreizten Zungen nicht aus der Nut herausspringen kann, wird vorgeschlagen, daß die Außenflächen der Zungen gegen das Zungenende hin voneinander weg geneigt sind. Dadurch hintergreifen die Zungen die Nutränder. Der Drahthalter kann in Längsrichtung der Nut kontinuierlich verschoben werden.

Ein Ausführungsbeispiel wird anhand der Zeichnungen erläutert, in denen darstellen:

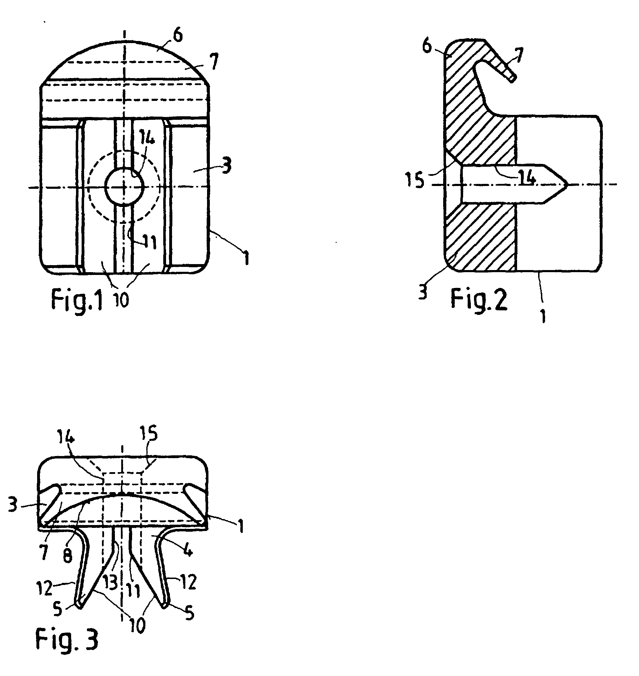

Fig. 1 eine Ansicht des Drahthalters von der Fußseite,
Fig. 2 einen Schnitt durch Fig. 1,
Fig. 3 eine Draufsicht zu Fig. 1 und
Fig. 4 den in einen Nutzaunpfahl eingebauten Drahthalter mit Spannelement.

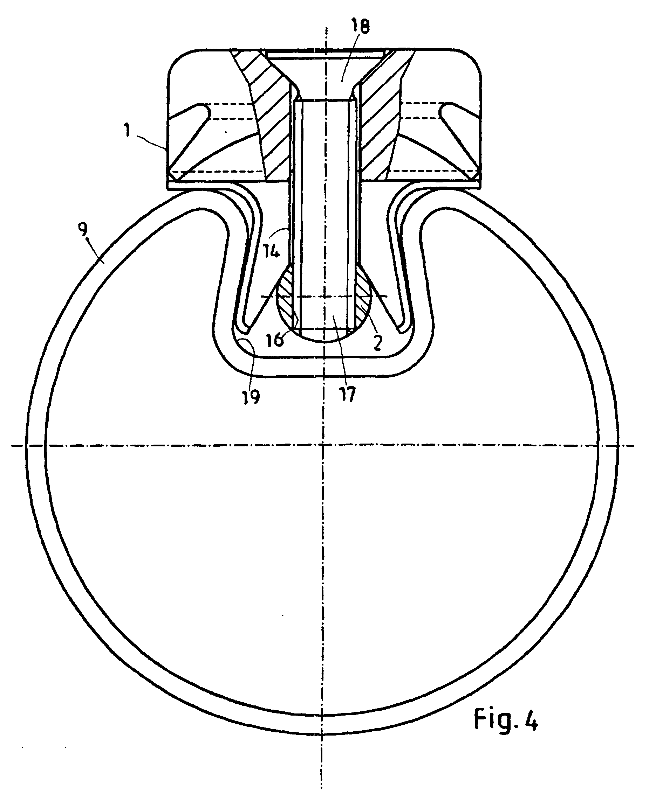

Der Drahthalter umfaßt einen Körper 1 und ein zylinderförmiges Spannelement 2, siehe Fig. 4.

Der Körper 1 trägt an einem etwa rechteckförmigen Hauptteil 3 einen Fuß 4 mit zwei parallel zueinander und parallel zu einer Seitenfläche des Hauptteils 3 ausgerichteten Zungen 5 sowie einen Haken 6 mit einer Nase 7, die etwa quer zu den Zungen 5 ausgerichtet ist. Die Endkante 8 der Nase 7 verläuft nach einer Kreislinie entsprechend dem Durchmesser eines Nutzaunpfahls 9, siehe Fig. 4. Der Haken 6 nimmt einen nicht dargestellten Draht bzw. Spanndraht auf.

Die Zungen 5 bilden mit ihren Innenflächen 10 eine V-förmige Rinne 11 mit einer einen Rechteckquerschnitt aufweisenden Rinnensohle 13. Die Außenflächen 12 der Zungen 5 sind voneinander weg geneigt und haben gegen die Enden der Zungen 5 einen zunehmend größeren Abstand voneiander. Dadurch sind die Außenflächen 12 der Zungen 5 vorgespannt. Etwa in der Mitte der Rinnensohle 13 mündet ein Durchgang 14, der von der Kopffläche des Körpers 1 ausgeht. In der Kopffläche des Körpers 1 ist ein Senkrand 15 ausgebildet.

Das massive, zylinderförmige Spannelement 2 besteht aus Metall, insbsondere einem korrosionsbeständigen Metall wie Messing und weist einen senkrecht zur Achse des Spannelements 2 ausgerichteten Gewindedurchgang 16 auf. In diesen Gewindedurchgang 16 greift ein Gewinde einer Schraube 17 mit einem Senkkopf 18 ein.

Fig. 4 zeigt den Einbau des Drahthalters in einen Nutzaunpfahl 9. Der Nutzaunpfahl 9 hat normalerweise einen Kreisquerschnitt und parallel zur Achse eine hinterschnittene Nut. 19, die also insgesamt einen Trapezquerschnitt hat. Zunächst wird das zylnderförmige Spannelement 2 in die Rinne 11 des Körpers 1 des Drahthalters eingelegt und mit der Schraube 17 festgelegt, so daß der Drahthalter vormontiert ist. Der so vormontierte Drahthalter wird in die Nut 19 eingeschoben oder eingedrückt. Der Drahthalter kann in Längsrichtung der Nut 19 verschoben und somit stufenlos verstellt werden. Dieses ist im praktischen Gebrauch wichtig, da so eine Führung der Spanndrähte in Anpassung an die Geländeverhältnisse möglich ist. Durch Anziehen der Schraube 17 werden die Zungen 5 gespreit, und dadurch wird der Drahthalter in der Nut 19 festgeklemmt. Durch Lösen der Schraube 17 kann die Klemmung jederzeit aufgehoben und der Drahthalter verstellt werden.

## Patentansprüche

1. Drahthalter für einen Nutzaunpfahl (9), dessen Körper (1) einen in die Nut (19) einsetzbaren, mit einem Spannelement (2) zusammenwirkenden Fuß (4) mit zwei parallelen, eine Rinne (11) begrenzenden, nachgiebigen Zungen (5) aufweist, **dadurch gekennzeichnet, daß** der Fuß (4) mit einem zylinderförmig ausgebildeten Spannelement (2) zusammenwirkt, daß das Spannelement (2) mit einem senkrecht zur Zylinderachse ausgerichteten Gewindedurchgang (16) in die Rinne (11) einlegbar ist und an den Zungen (5) anliegt und daß eine Schraube (17) durch einen Durchgang (14) des Körpers (2) hindurchreicht und in den Gewindedurchgang (16) des Spannelements (2) eingreift.

2. Drahthalter nach Anspruch 1, **dadurch gekennzeichnet, daß** die Rinne (11) einen V-förmigen Querschnitt hat.

3. Drahthalter nach Anspruch 2, **dadurch gekennzeichnet, daß** die Außenflächen (12) der Zungen (5) gegen das Zungenende hin voneinander weg geneigt sind.

## Claims

1. A wire mount for mounting wires on a grooved post (9) for a fence, the body (1) of the mount has a foot (4) insertable in the groove (19) and cooperating with a tension element (2), said foot (4) having two parallel elastic tongues (5) which limit a channel (11), **characterized in that** the foot (4) cooperates with a cylinder-shaped tension element (2) having a threaded hole (16) as directes at right angle to the cylinder axis, that the tension element (2) can be led in the groove (19) and lies against the tongues (5) and that a screw (16) passes through a hole (14) of the body (2) and engages into the threaded hole (16) of the tnesion element (2).

2. A wire mount according to claim 1 **charaterized in** that the groove (11) is V-shaped.

3. A wire mount according to claim 2 **charaterized in** that the outer surfaces (12) of the tongues (5) are inclined with an increasing distance in the direction of the extremity of the tongues.

## Revendications

1. Serre-fil pour poteau de clôture (9) dont le corps (1) présente un pied (4) insérable dans la rainure (19), coopérant avec un élément tendeur (2), comprenant deux languettes (5) souples parallèles, limitant une gorge (11), **caractérisé en ce que** le pied (4) coopère avec un élément tendeur (2) conformé comme un cylindre, **en ce que** l'élément tendeur (2) avec un passage fileté (16) orienté perpendiculairement à l'axe du cylindre peut être placé dans la gorge (11) et vient reposer contre les languettes (5) et **en ce qu'**une vis (17) traverse un passage (14) du corps (2) et entre en prise avec le passage fileté (16) de l'élément tendeur (2).

2. Serre-fil selon la revendication 1, **caractérisé en ce que** la gorge (11) a une section transversale en forme de V.

3. Serre-fil selon la revendication 2, **caractérisé en ce que** les surfaces extérieures (12) des languettes (5) sont inclinées en s'écartant l'une de l'autre en direction de l'extrémité des languettes.
